# EUROPÄISCHE PATENTSCHRIFT

(11) **EP 3 138 966 B1**
(45) Veröffentlichungstag und Bekanntmachung des Hinweises auf die Patenterteilung: **04.03.2020**
(21) Anmeldenummer: 16183959.2
(22) Anmeldetag: 12.08.2016
(51) Int. Cl.: E03C 1/04, B60N 3/18, B60R 15/02

(54) **WASSERARMATUR, INSBESONDERE FÜR EINEN WOHNWAGEN, CARAVAN, MOTORCARAVAN ODER EIN BOOT**
WATER MIXER, IN PARTICULAR FOR A CARAVAN, CARAVAN, MOTOR CARAVAN OR A BOAT
ROBINETTERIE, EN PARTICULIER POUR CARAVANE, CAMPING-CAR OU BATEAU

(30) Priorität: 28.08.2015 DE 102015114325
(43) Veröffentlichungstag der Anmeldung: 08.03.2017
(73) Patentinhaber: Reich GmbH Regel- und Sicherheitstechnik, 35713 Eschenburg-Wissenbach (DE)
(72) Erfinder: ROELVINK, Hans, 3016 AJ Rotterdam (NL); HIEMSTRA, Joep, 3037 AE Rotterdam (NL)
(74) Vertreter: Hofstetter, Schurack & Partner

(56) Entgegenhaltungen:
- DE-A1- 3 514 488
- ES-A1- 8 704 609
- JP-A- 2002 364 034
- US-A- 3 056 418
- US-A- 3 726 318
- US-A- 4 398 668

## Beschreibung

Die Erfindung betrifft eine Wasserarmatur, insbesondere für einen Wohnwagen, Caravan, Motorcaravan oder ein Boot, gemäß dem Oberbegriff von Patentanspruch 1.

Derartige Wasserarmaturen, insbesondere für Wohnwagen, Caravans, Motocaravans oder Boote, sind aus dem allgemeinen Stand der Technik bereits hinlänglich bekannt. Eine solche Wasserarmatur umfasst wenigstens ein Gehäuseteil, welches einen von Wasser durchströmbaren ersten Kanal und einen zumindest teilweise fluidisch von dem ersten Kanal getrennten und von Wasser durchströmbaren, zweiten Kanal aufweist. Bei dem den ersten Kanal durchströmenden Wasser handelt es sich beispielsweise um Warmwasser beziehungsweise warmes Wasser, wobei es sich bei dem den zweiten Kanal durchströmenden Wasser beispielsweise um Kaltwasser beziehungsweise kaltes Wasser handelt, welches gegenüber dem Warmwasser eine niedrigere Temperatur aufweist, da das Warmwasser beispielsweise mittels einer Heizeinrichtung erwärmt wird.

Mittels der Kanäle wird das Wasser beispielsweise von einem Reservoir zu einem Wasserauslauf der Wasserarmatur geführt, so dass das Wasser über den Wasserauslauf aus der Wasserarmatur strömen und von einer Person genutzt werden kann.

JP 2002-364034 A offenbart eine Wasserarmatur gemäß dem Oberbegriff des Patentanspruchs 1.

Aus der US 3 726 318 A, ES 8 704 609 A1 und US 3 056 418 A sind ebenfalls Wasserarmaturen bekannt.

Der US 4 398 668 A ist ein Duschkopf als bekannt zu entnehmen.

Außerdem offenbart die DE 35 14 488 A1 eine grifflose Mischarmatur, bestehend aus einem Ventilkörper, mindestens je einer Zuleitung für Kalt- und Warmwasser und einem oder mehreren Regelelementen zur Regelung der Wassermenge und der Mischtemperatur des auslaufenden Wassers.

Aufgabe der vorliegenden Erfindung ist es, eine Wasserarmatur der eingangs genannten Art derart weiterzuentwickeln, dass sich eine besonders vorteilhafte Funktion der Wasserarmatur realisieren lässt, wobei gleichzeitig die Kosten der Wasserarmatur besonders gering gehalten werden können.

Diese Aufgabe wird erfindungsgemäß durch eine Wasserarmatur mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft eine Wasserarmatur, insbesondere für einen Wohnwagen, Caravan, Motorcaravan oder ein Boot, mit wenigstens einem Gehäuseteil, welches eine von Wasser durchströmbaren ersten Kanal und einen von Wasser durchströmbaren zweiten Kanal aufweist, welcher zumindest teilweise fluidisch von dem ersten Kanal getrennt ist.

Um nun eine besonders vorteilhafte Funktion der Wasserarmatur realisieren und dabei gleichzeitig die Kosten der Wasserarmatur besonders gering halten zu können, ist ein zweites Gehäuseteil vorgesehen, welches einen von Wasser durchströmbaren und fluidisch mit dem ersten Kanal verbundenen, dritten Kanal und einen zumindest teilweise fluidisch von dem dritten Kanal getrennten, von Wasser durchströmbaren und fluidisch mit dem zweiten Kanal verbundenen, vierten Kanal aufweist. Dabei ist das Gehäuseteil um eine Drehachse relativ zu dem ersten Gehäuseteil drehbar.

Vorzugsweise sind die Gehäuseteile miteinander verbunden und dabei relativ zueinander drehbar, während sie miteinander verbunden sind und während der erste Kanal mit dem dritten Kanal und der zweite Kanal mit dem vierten Kanal fluidisch verbunden ist.

Ferner ist wenigstens ein fluidisch mit dem dritten Kanal und dem vierten Kanal verbindbarer und stromab der Kanäle angeordneter Mischbereich zum Mischen des Wassers aus dem dritten Kanal mit dem Wasser aus dem vierten Kanal vorgesehen, wobei der Mischbereich mit dem zweiten Gehäuseteil relativ zu dem ersten Gehäuseteil mitdrehbar ausgebildet ist. Unter der Anordnung des Mischbereichs stromab der Kanäle ist zu verstehen, dass der Mischbereich bezogen auf eine Strömungsrichtung des Wassers durch die Kanäle stromab der Kanäle angeordnet ist, so dass das Wasser zunächst durch die Kanäle und erst daran anschließend in den Mischbereich strömt. Mit anderen Worten sind die Kanäle beispielsweise an jeweiligen Trennstellen oder Übergabestellen fluidisch miteinander verbunden. An diesen Trennstellen kann das Wasser aus dem ersten Kanal und dem zweiten Kanal in den dritten Kanal beziehungsweise vierten Kanal überströmen.

Bezogen auf die Strömungsrichtung des Wassers durch die Kanäle ist der Mischbereich stromab der Trennstelle angeordnet, so dass sich der Mischbereich mit dem ersten Gehäuseteil mitdreht, wenn das erste Gehäuseteil um die Drehachse relativ zu dem zweiten Gehäuseteil gedreht wird. Der Mischbereich ist somit sozusagen stromab der Drehung beziehungsweise Drehbarkeit der Gehäuseteile angeordnet, so dass sozusagen die Drehung beziehungsweise Drehfunktion der Gehäuseteile bezogen auf die Strömungsrichtung des Wassers durch die Kanäle vor den Mischbereich beziehungsweise stromauf des Mischbereichs realisiert ist. Dadurch kann zum einen eine besonders vorteilhafte Funktion der Wasserarmatur realisiert werden, da die Gehäuseteile relativ zueinander drehbar sind. Zum anderen kann die Teileanzahl der Wasserarmatur besonders gering gehalten werden, so dass die Kosten der Wasserarmatur in einem besonders geringen Rahmen gehalten werden können.

Unter der fluidischen Verbindbarkeit des Mischbereichs mit dem dritten und dem vierten Kanal ist zu verstehen, dass der Mischbereich beispielsweise mit dem dritten Kanal fluidisch verbunden ist, während der Mischbereich von dem vierten Kanal fluidisch getrennt ist. Somit strömt ausschließlich Wasser aus dem dritten Kanal in den Mischbereich, während das Wasser aus dem vierten Kanal nicht in den Mischbereich strömt. Ferner ist es beispielsweise möglich, den Mischbereich mit dem vierten Kanal fluidisch zu verbinden, während der Mischbereich von dem dritten Kanal fluidisch getrennt ist. Dadurch strömt ausschließlich Wasser aus dem vierten Kanal in den Mischbereich, während das Wasser aus dem dritten Kanal nicht in den Mischbereich einströmt. Darüber hinaus ist es beispielsweise möglich, den Mischbereich sowohl mit dem dritten Kanal als auch mit dem vierten Kanal fluidisch zu verbinden, so dass Wasser aus dem dritten und vierten Kanal in den Mischbereich strömen kann und so dass sich das Wasser aus dem dritten Kanal mit dem Wasser aus dem vierten Kanal beziehungsweise umgekehrt vermischt. Dadurch ist es beispielsweise möglich, ein Verhältnis von Wasser aus dem dritten Kanal zu Wasser aus dem vierten Kanal in den Mischbereich einzustellen.

Um die Teileanzahl der Wasserarmatur besonders gering zu halten und gleichzeitig einen besonders vorteilhaften optischen Eindruck zu realisieren, ist es erfindungsgemäß vorgesehen, dass die Gehäuseteile jeweils zumindest teilweise in einem äußeren, dritten Gehäuseteil aufgenommen sind, wobei das dritte Gehäuseteil mit dem zweiten Gehäuseteil relativ zum ersten Gehäuseteil um die Drehachse mitdrehbar ist. Hierzu ist das dritte Gehäuseteil beispielsweise zumindest mittelbar mit dem zweiten Gehäuseteil verbunden, insbesondere drehfest verbunden, so dass beispielsweise das zweite Gehäuseteil über das dritte Gehäuseteil relativ zum ersten Gehäuseteil um die Drehachse gedreht werden kann.

Außerdem ist es vorgesehen, dass der Mischbereich in dem dritten Gehäuseteil angeordnet ist.

Vorzugsweise ist das zweite Gehäuseteil um wenigstens 360 Grad um die Drehachse relativ zu dem ersten Gehäuseteil drehbar ist. Insbesondere ist es vorzugsweise vorgesehen, dass das zweite Gehäuseteil um die Drehachse relativ zum ersten Gehäuseteil grenzenlos drehbar ist. Darunter ist zu verstehen, dass das erste Gehäuseteil relativ zum zweiten Gehäuseteil um ein Vielfaches von 360 Grad drehbar ist, ohne dass eine solche Drehung des ersten Gehäuseteils relativ zum zweiten Gehäuseteil begrenzt ist. Dadurch kann eine besonders vorteilhafte Funktionalität realisiert werden. Ferner kann die Teileanzahl der Wasserarmatur besonders gering gehalten werden, so dass die Kosten der Wasserarmatur in einem besonders geringen Rahmen gehalten werden können.

Um die Teileanzahl und den Bauraumbedarf der Wasserarmatur besonders gering zu halten, ist der dritte Kanal vorzugsweise koaxial zur Drehachse angeordnet. Dies bedeutet beispielsweise, dass der dritte Kanal eine Längserstreckungsrichtung oder eine Längsachse, insbesondere Längsmittelachse, aufweist, zu welcher der dritte Kanal rotationssymmetrisch ausgebildet sein kann, wobei die Längserstreckungsrichtung beziehungsweise die Längsachse, insbesondere die Längsmittelachse, mit der Drehachse zusammenfällt.

Eine weitere Ausführungsform zeichnet sich dadurch aus, dass durch das erste und zweite Gehäuseteil ein Übergabebereich gebildet ist, welcher fluidisch mit dem vierten Kanal verbunden ist. Dabei mündet der zweite Kanal in den Übergabebereich. Der Übergabebereich ist somit in Strömungsrichtung des Wassers durch den zweiten Kanal und den vierten Kanal stromab des zweiten Kanals und stromauf des vierten Kanals, das heißt zwischen dem zweiten Kanal und dem vierten Kanal angeordnet, so dass der vierte Kanal über den Übergabebereich mit dem zweiten Kanal fluidisch verbunden ist. Somit wird das Wasser aus dem zweiten Kanal dem vierten Kanal über den Übergabebereich zugeführt beziehungsweise übergeben. Dabei umgibt der Übergabebereich zumindest einen Längenbereich des zweiten Gehäuseteils, wobei durch den Längenbereich wenigstens ein Teilbereich des dritten Kanals begrenzt ist. Mit anderen Worten weist das zweite Gehäuseteil in dem genannten Längenbereich eine Wandung oder einen Wandungsbereich auf, durch welchen wenigstens ein Teilbereich des dritten Kanals begrenzt ist. Dabei erstreckt sich der Übergabebereich zumindest teilweise um den Wandungsbereich beziehungsweise um die Wandung herum.

Wieder mit anderen Worten ausgedrückt ist der Übergabebereich in eine Richtung, welche senkrecht zur Strömungsrichtung verläuft, in die das Wasser durch den dritten Kanal strömt, nach innen hin durch den Längenbereich und somit die Wandung beziehungsweise den Wandungsbereich des zweiten Gehäuseteils begrenzt, so dass der Teilbereich des dritten Kanals in dem Übergabebereich angeordnet und dabei mittels des Längenbereichs beziehungsweise der Wandung fluidisch von dem Übergabebereich getrennt ist. Dadurch kann sich das im Übergabebereich befindende Wasser nicht mit dem den dritten Kanal durchströmenden Wasser vermischen.

Als besonders vorteilhaft hat es sich gezeigt, wenn der Übergabebereich den Längenbereich in dessen Umfangsrichtung zumindest teilweise umlaufend umgibt. Dadurch kann die Versorgung des vierten Kanals mit Wasser gewährleistet werden.

Eine weitere Ausführungsform zeichnet sich dadurch aus, dass der Übergabebereich den Längenbereich in dessen Umfangsrichtung vollständig umlaufend umgibt. Der Übergabebereich ist somit beispielsweise als Ringraum ausgebildet. Hierdurch kann das zweite Gehäuseteil um ein Vielfaches von 360 Grad relativ zum ersten Gehäuseteil gedreht werden, während der vierte Kanal über den Übergabebereich mit dem zweiten Kanal fluidisch verbunden bleibt. Dadurch kann die Versorgung des vierten Kanals mit dem Wasser aus dem zweiten Kanal in allen Drehstellungen des zweiten Gehäuseteils gewährleistet werden.

Eine weitere Ausführungsform zeichnet sich dadurch aus, dass das äußere dritte Gehäuseteil einstückig ausgebildet ist. Dadurch können die Teileanzahl und die Kosten der Wasserarmatur besonders gering gehalten werden.

Um die Teileanzahl und somit die Kosten der Wasserarmatur besonders gering zu halten, ist es bei einer weiteren Ausführungsform der Erfindung vorgesehen, dass durch das dritte Gehäuseteil ein Wasserauslaufrohr der Wasserarmatur gebildet ist. Das Wasserauslaufrohr ist mit dem Mischbereich fluidisch verbunden, so dass dem Wasserauslaufrohr das bereits vermischte Wasser beziehungsweise das Wasser aus dem Mischbereich zugeführt werden kann. Das Wasser wird mittels des Wasserauslaufrohrs zu einem Wasserauslauf der Wasserarmatur geführt, so dass das Wasser über den Wasserauslauf aus der Wasserarmatur ausströmen und von einem Nutzer beziehungsweise einer Person schließlich genutzt werden kann.

Um den Bauraumbedarf der Wasserarmatur besonders gering zu halten, ist es bei einer weiteren Ausführungsform der Erfindung vorgesehen, dass das zweite Gehäuseteil vollständig in dem dritten Gehäuseteil aufgenommen ist.

Bei einer weiteren vorteilhaften Ausgestaltung der Erfindung ist wenigstens ein relativ zu den Gehäuseteilen bewegbares Ventilelement vorgesehen, mittels welchem ein Gemisch aus dem Wasser aus dem dritten Kanal und dem Wasser aus dem vierten Kanal einstellbar ist. Das Ventilelement ist beispielsweise in dem dritten Gehäuseteil aufgenommen. Ferner ist es denkbar, dass der Mischbereich in dem dritten Gehäuseteil angeordnet ist. Mittels des Ventilelements ist die zuvor beschriebene, jeweilige fluidische Verbindung des Mischbereichs mit dem dritten Kanal und dem vierten Kanal einstellbar, so dass mittels des Ventilelements das vorbeschriebene Verhältnis von Wasser aus dem dritten Kanal zu Wasser aus dem vierten Kanal einstellbar ist.

Um das Verhältnis von Wasser aus dem dritten Kanal zu Wasser aus dem vierten Kanal besonders bedarfsgerecht einstellen zu können, ist vorzugsweise wenigstens ein außerhalb der Gehäuseteile angeordnetes und mit dem Ventilelement gekoppeltes beziehungsweise verbundenes Bedienelement vorgesehen, über welches das Ventilelement bewegbar ist. Beispielsweise ist das Bedienelement um eine Drehachse drehbar, so dass durch Bewegen, insbesondere Drehen, des Bedienelements das Ventilelement bewegbar ist. Dadurch kann durch Drehen des Bedienelements das Gemisch bedarfsgerecht von der Person eingestellt werden.

Vorzugsweise ist das Bedienelement seitlich des dritten Gehäuseteils angeordnet. Darunter ist beispielsweise zu verstehen, dass das Bedienelement bezogen auf eine Richtung, die senkrecht zur Strömungsrichtung des Wassers durch den ersten Kanal und/oder durch den zweiten Kanal verläuft, neben dem dritten Gehäuseteil angeordnet ist. Dadurch kann der Bauraumbedarf, insbesondere die Höhe, der Wasserarmatur besonders gering gehalten werden. Alternativ ist es denkbar, dass das Bedienelement bezogen auf die genannte Richtung über beziehungsweise oberhalb des dritten Gehäuseteils angeordnet ist.

Als besonders vorteilhaft hat es sich gezeigt, wenn das Ventilelement in dem dritten Gehäuseteil aufgenommen ist.

Um die Kosten der Wasserarmatur besonders gering zu halten, ist es bei einer weiteren Ausführungsform der Erfindung vorgesehen, dass durch das erste Gehäuseteil ein Verbindungselement, insbesondere ein Gewinde, gebildet ist, mittels welchem die Wasserarmatur mit einem korrespondierenden Bauelement des Wohnwagens, Caravans, Motorcaravans oder Boots verbindbar ist.

Schließlich hat es sich als besonders vorteilhaft gezeigt, wenn das erste Gehäuseteil und/oder das zweite Gehäuseteil einstückig ausgebildet ist. Dadurch können die Teileanzahl und somit die Kosten der Wasserarmatur besonders gering gehalten werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht einer erfindungsgemäßen Wasserarmatur;
- Fig. 2: eine schematische Schnittansicht der Wasserarmatur;
- Fig. 3: eine schematische Perspektivansicht von Gehäuseteilen der Wasserarmatur;
- Fig. 4: eine schematische und perspektivische Schnittansicht der Gehäuseteile gemäß Fig. 3; und
- Fig. 5: eine schematische Schnittansicht der Gehäuseteile gemäß Fig. 3 und 4.

In den Figuren sind gleiche oder funktionsgleiche Elemente mit gleichen Bezugszeichen versehen.

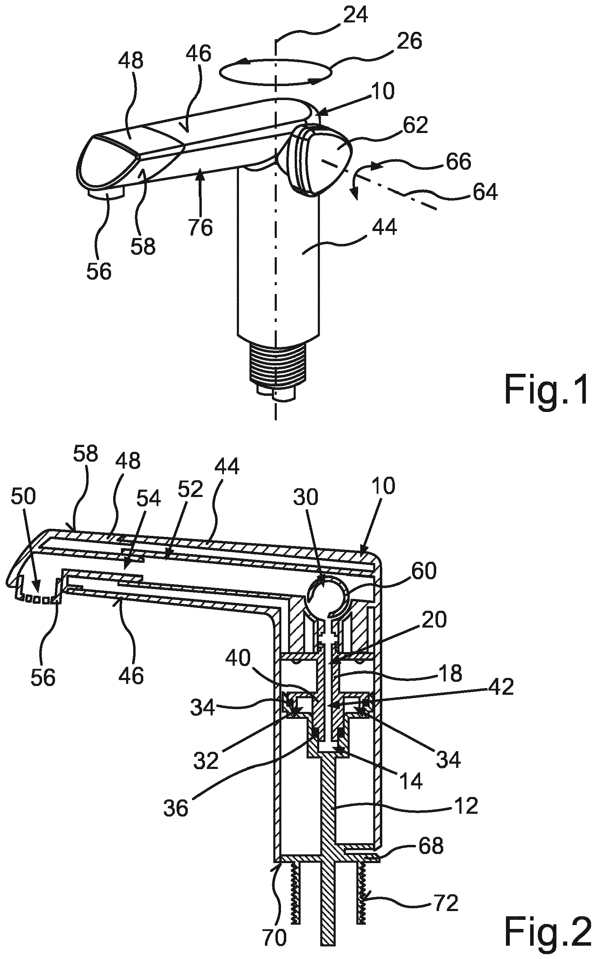

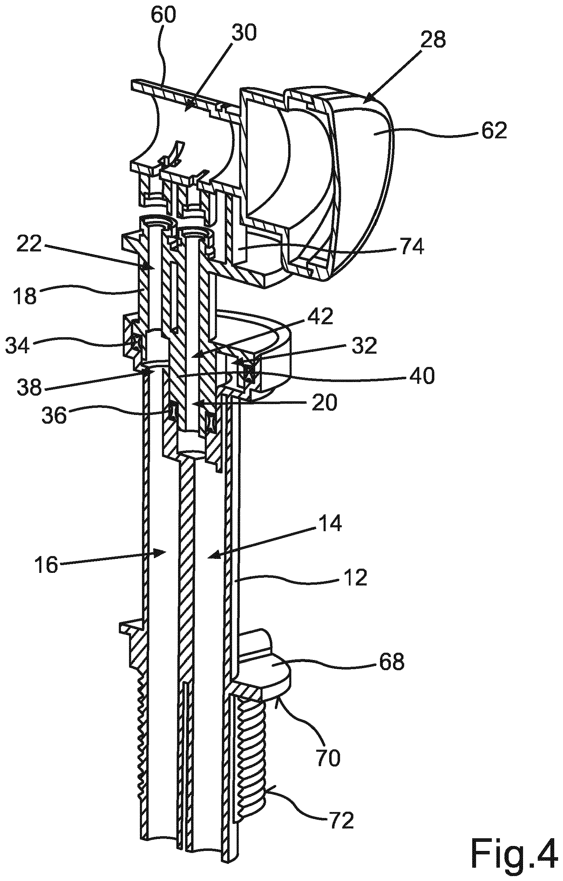

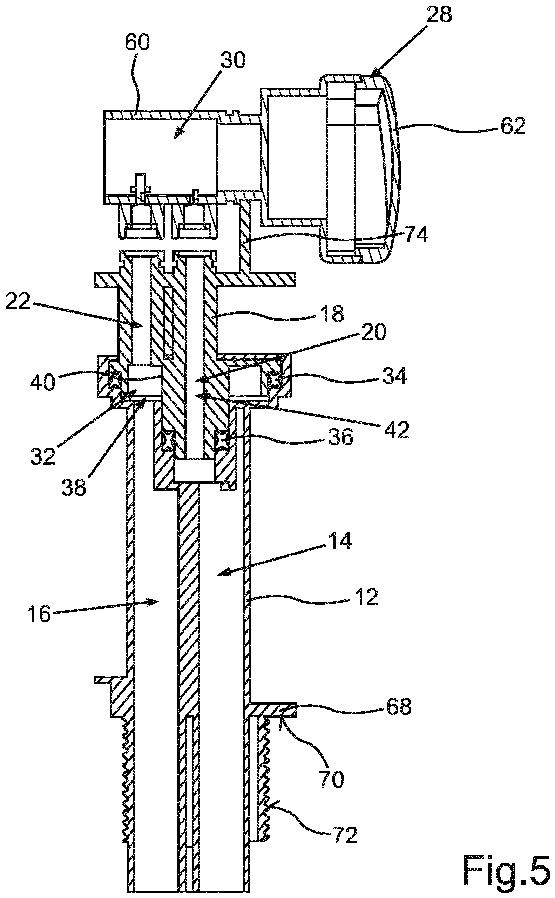

Fig. 1 zeigt in einer schematischen Perspektivansicht eine im Ganzen mit 10 bezeichnete Wasserarmatur, insbesondere für einen Wohnwagen, Caravan, Motorcaravan oder ein Boot. In Zusammenschau mit Fig. 2 ist besonders gut erkennbar, dass die Wasserarmatur 10 ein erstes Gehäuseteil 12 umfasst, welches vorliegend einstückig ausgebildet und aus einem Kunststoff hergestellt ist. Ferner ist in Zusammenschau mit Fig. 4 und 5 besonders gut erkennbar, dass das erste Gehäuseteil 12 einen von Wasser in eine Strömungsrichtung durchströmbaren ersten Kanal 14 und einen von Wasser in eine Strömungsrichtung durchströmbaren, zweiten Kanal 16 aufweist. Dabei ist der erste Kanal 14 zumindest teilweise, insbesondere zumindest überwiegend, fluidisch von dem zweiten Kanal 16 getrennt ist, so dass kein Wasser aus dem ersten Kanal 14 in den zweiten Kanal 16 überströmen kann und umgekehrt.

Das den ersten Kanal 14 durchströmende Wasser ist beispielsweise Warmwasser beziehungsweise warmes Wasser, welches mittels einer Heizeinrichtung des Wohnwagens, Caravans, Motorcaravans oder Boots erwärmt wird. Das den zweiten Kanal 16 durchströmende Wasser ist vorzugsweise Kaltwasser beziehungsweise kaltes Wasser, welches nicht mittels der Heizeinrichtung erwärmt wird und demzufolge eine geringere Temperatur als das Warmwasser beziehungsweise warme Wasser aufweist.

Die Wasserarmatur 10 umfasst ferner ein zweites Gehäuseteil 18, welches vorzugsweise einstückig ausgebildet und aus einem Kunststoff hergestellt ist. Aus Fig. 2 ist besonders gut erkennbar, dass ein Teilbereich des zweiten Gehäuseteils 18 in dem ersten Gehäuseteil 12 aufgenommen ist, wobei - wie im Folgenden noch genauer erläutert wird - beide Gehäuseteile 12 und 18 als innere Gehäuseteile der Wasserarmatur 10 ausgebildet sind.

Aus Fig. 4 und 5 ist erkennbar, dass das zweite Gehäuseteil 18 einen von Wasser in eine Strömungsrichtung durchströmbaren dritten Kanal 20 sowie einen von Wasser in eine Strömungsrichtung durchströmbaren vierten Kanal 22 aufweist, wobei die Kanäle 20 und 22 zumindest teilweise fluidisch voneinander getrennt sind. Der dritte Kanal 20 ist fluidisch mit dem ersten Kanal 14 verbunden, so dass das Wasser aus dem ersten Kanal 14 in den dritten Kanal 20 überströmen kann. Ferner ist der vierte Kanal 22 fluidisch mit dem zweiten Kanal 16 verbunden, so dass das Wasser aus dem zweiten Kanal 16 in den vierten Kanal 22 überströmen kann. Das zweite Gehäuseteil 18 ist um eine Drehachse 24 um wenigstens 360 Grad relativ zu dem ersten Gehäuseteil 12 drehbar. Vorliegend ist diese Drehbarkeit des zweiten Gehäuseteils 18 relativ zum ersten Gehäuseteil 12 grenzenlos, so dass das zweite Gehäuseteil 18 um die Drehachse 24 um ein Vielfaches von 360 Grad relativ zum ersten Gehäuseteil 12 gedreht werden kann. Dies ist in Fig. 1 durch einen Kreis 26 aus Richtungspfeilen veranschaulicht.

Mit anderen Worten ist die Drehbarkeit des zweiten Gehäuseteils 18 relativ zum ersten Gehäuseteil 12 um die Drehachse 24 unbegrenzt. Während einer solchen Relativdrehung zwischen dem ersten Gehäuseteil 12 und dem zweiten Gehäuseteil 18 bleiben jedoch die Kanäle 20 und 22 mit den Kanälen 14 und 16 verbunden, so dass trotz einer solchen Relativdrehung die Kanäle 20 und 22 mit Wasser aus den Kanälen 14 und 16 versorgt werden.

Darüber hinaus ist wenigstens ein fluidisch mit dem dritten Kanal 20 und mit dem vierten Kanal 22 verbindbarer Mischbereich 30 vorgesehen, welcher bezogen auf die jeweilige Strömungsrichtung des Wassers durch die Kanäle 14, 16, 20 und 22 stromab der Kanäle 14, 16, 20 und 22 angeordnet ist. Dies bedeutet, dass das jeweilige Wasser zunächst die Kanäle 14 und 16 und daran anschließend die Kanäle 20 und 22 durchströmt und daran anschließend in den Mischbereich 30 einströmt. Der Mischbereich 30 ist dabei mit dem zweiten Gehäuseteil 18 relativ zu dem ersten Gehäuseteil 12 um die Drehachse 24 mitdrehbar ausgebildet. Dies bedeutet, dass der Mischbereich 30 mit dem zweiten Gehäuseteil 18 mitgedreht wird, wenn das zweite Gehäuseteil 18 um die Drehachse 24 relativ zum ersten Gehäuseteil 12 gedreht wird.

Der Mischbereich 30 dient dem Mischen des Wassers aus dem Kanal 20 mit dem Wasser aus dem Kanal 22, wobei dieses Mischen bezogen auf die Strömungsrichtung des Wassers stromab der Drehfunktion angeordnet ist. Dadurch können die Teileanzahl und somit die Kosten der Wasserarmatur 10 besonders gering gehalten werden. Aus Fig. 2 und 5 in Zusammenschau mit Fig. 1 ist besonders gut erkennbar, dass der dritte Kanal 20 koaxial zur Drehachse 24 angeordnet ist. Dabei weist der dritte Kanal 20 eine Längserstreckungsrichtung auf, welche mit einer Längsachse, insbesondere Längsmittelachse, des dritten Kanals 20 zusammenfällt. Bezogen auf diese Längsmittelachse ist der dritte Kanal 20 rotationssymmetrisch ausgebildet, wobei die Längsmittelachse mit der Drehachse 24 zusammenfällt.

Ferner ist der vierte Kanal 22 achsparallel zu beziehungsweise neben dem dritten Kanal 20 angeordnet. Auch der vierte Kanal 22 weist eine Längserstreckungsrichtung und dabei eine Längsachse, insbesondere Längsmittelachse, auf, zu welcher der vierte Kanal 22 rotationssymmetrisch ausgebildet ist. Die Längsmittelachse des vierten Kanals 22 verläuft dabei parallel zur Längsmittelachse des dritten Kanals 20 und ist von der Längsmittelachse des dritten Kanals beabstandet.

Wie besonders gut aus Fig. 2 bis 5 erkennbar ist, ist durch die Gehäuseteile 12 und 18 ein Übergabebereich 32 gebildet, welcher teilweise durch das zweite Gehäuseteil 18 und teilweise durch das Gehäuseteil 12 begrenzt ist. Um den Übergabebereich 32 gegen die Umgebung der Gehäuseteile 12 und 18 sowie gegen den ersten Kanal 14 und den dritten Kanal 20 abzudichten, sind Dichtungselemente in Form von Dichtringen 34 und 36 vorgesehen. Die Dichtringe 34 und 36 sind einerseits am Gehäuseteil 12 und andererseits am Gehäuseteil 18 abgestützt, so dass die Gehäuseteile 12 und 18 mittels der Dichtringe 34 und 36 gegenseitig abgedichtet sind. Die Dichtringe 34 und 36 lassen dabei eine Relativdrehung zwischen den Gehäuseteilen 12 und 18 zu, während sie den Übergabebereich 32 abdichten.

Der Übergabebereich 32 ist fluidisch mit dem vierten Kanal 22 verbunden, wobei der zweite Kanal 16 über eine Austrittsöffnung 38 in den Übergabebereich 32 mündet. Dadurch kann das den zweiten Kanal 16 durchströmende Wasser über die Austrittsöffnung 38 aus dem zweiten Kanal 16 aus- und in den Übergabebereich 32 einströmen. Von dem Übergabebereich 32 kann das Wasser in den vierten Kanal 22 strömen, so dass der vierte Kanal 22 über den Übergabebereich 32 fluidisch mit dem zweiten Kanal 16 verbunden ist. Der Übergabebereich 32 dient somit der Übergabe des Wassers aus dem Kanal 16 in den Kanal 22. Dabei umgibt der Übergabebereich 32 zumindest einen Längenbereich 40 des zweiten Gehäuseteils 18, wobei der Längenbereich 40 wenigstens einen korrespondierenden Teilbereich 42 des dritten Kanals 20 begrenzt. Mit anderen Worten weist das zweite Gehäuseteil 18 in dem Längenbereich 40 eine Wandung beziehungsweise einen Wandungsbereich auf, wobei diese Wandung beziehungsweise dieser Wandungsbereich den Teilbereich 42 des dritten Kanals 20 begrenzt.

Dabei umgibt der Übergabebereich 32 die genannte Wandung beziehungsweise den genannten Wandungsbereich außenumfangsseitig, wobei der Übergabebereich 32 den Längenbereich 40 und somit die Wandung beziehungsweise den Wandungsbereich in dessen Umfangsrichtung vollständig umlaufend umgibt. Diese Umfangsrichtung verläuft dabei um die Längsmittelachse des dritten Kanals 20. Der Übergabebereich 32 ist somit als Ringkanal beziehungsweise Ringraum ausgebildet, dessen axiale Richtung mit der axialen Richtung des Kanals 20 zusammenfällt. Der Ringraum ist beispielsweise bezogen auf eine Längsmittelachse rotationssymmetrisch ausgebildet, wobei diese Längsmittelachse des Ringraums mit der Längsmittelachse des Kanals 20 zusammenfällt. Dabei wird der Übergabebereich 32 in radialer Richtung des Ringraums nach innen hin durch den Längenbereich 40 beziehungsweise die dort angeordnete Wandung begrenzt. In radialer Richtung nach außen hin wird der Übergabebereich 32 durch einen entsprechenden Wandungsbereich vorliegend des zweiten Gehäuseteils 18 begrenzt.

Dadurch, dass der Übergabebereich 32 den Längenbereich 40 in Umfangsrichtung vollständig umlaufend umgibt, bleibt der vierte Kanal 22 über den Übergabebereich 32 mit dem zweiten Kanal 16 in jeder Drehstellung des zweiten Gehäuseteils 18 relativ zu dem ersten Gehäuseteil 12 fluidisch verbunden, so dass der Kanal 22 in jeder Drehstellung mit Wasser aus dem Kanal 16 versorgt werden kann.

Die Wasserarmatur 10 umfasst ferner ein äußeres, drittes Gehäuseteil 44, welches vorliegend einstückig ausgebildet ist. Vorzugsweise ist das dritte Gehäuseteil 44 aus einem Kunststoff hergestellt. Dabei sind die Gehäuseteile 12 und 18 jeweils zumindest teilweise in dem äußeren dritten Gehäuseteil 44 angeordnet, wobei das Gehäuseteil 18 vollständig in dem Gehäuseteil 44 angeordnet ist und das Gehäuseteil 12 ein Stück aus dem Gehäuseteil 44 herausragt. Dabei ist durch das Gehäuseteil 44 eine Außenhaut 46 der Wasserarmatur 10 gebildet. Die Wasserarmatur 10 umfasst ferner ein separat vom Gehäuseteil 44 ausgebildetes und am Gehäuseteil 44 befestigtes Bauteil 48, durch welches ein Wasserauslauf 50 der Wasserarmatur 10 gebildet ist. Aus Fig. 2 ist erkennbar, dass das Gehäuseteil 44 einen von Wasser durchströmbaren Kanal 52 aufweist, welcher fluidisch mit dem Mischbereich 30 verbunden beziehungsweise verbindbar ist. Mit anderen Worten ist der Kanal 52 mit Wasser aus dem Mischbereich 30 versorgbar und von dem Wasser aus dem Mischbereich 30 durchströmbar. Dabei ist durch das Gehäuseteil 44 ein Wasserauslaufrohr 76 gebildet, mittels welchem das den Kanal 52 durchströmende Wasser zu dem Wasserauslauf 50 geführt wird.

Das Bauteil 48 weist einen fluidisch mit dem Kanal 52 verbundenen Kanal 54 auf, so dass das Wasser aus dem Mischbereich 30 über den Wasserauslauf 50 aus der Wasserarmatur 10 ausströmen kann. Dabei ist an dem Bauteil 48 ein weiteres Bauteil 56 der Wasserarmatur 10 gehalten. Das Bauteil 56 ist beispielsweise als Sieb oder Perlator ausgebildet und von dem Wasser durchströmbar. Auch durch das Bauteil 48 ist eine Außenhaut 58 der Wasserarmatur 10 gebildet. Das Gehäuseteil 44 und das Bauteil 48 sind beispielsweise verchromt, um ein vorteilhaftes optisches Äußeres der Wasserarmatur 10 zu schaffen. Da die Teileanzahl der Wasserarmatur 10 besonders gering gehalten werden kann, kann auch der Aufwand zum Verchromen gering gehalten werden, so dass insgesamt die Kosten der Wasserarmatur 10 in einem besonders geringen Rahmen gehalten werden können.

In dem Mischbereich 30 ist eine Kartusche 28 angeordnet, durch welche ein Ventilelement 60 gebildet ist, mittels welchem ein Gemisch aus dem Wasser aus dem dritten Kanal 20 und dem Wasser aus dem vierten Kanal 22 einstellbar ist. Dabei ist beispielsweise die jeweilige fluidische Verbindung des Mischbereichs 30 mit den Kanälen 20 und 22 mittels des Ventilelements 60 einstellbar. Vorliegend ist das Ventilelement 60 durch die Kartusche 28 beziehungsweise als Kartusche, insbesondere Mischkartusche, ausgebildet. Alternativ ist es denkbar, dass das Ventilelement 60 als Küken, Kugel oder anderes Ventilelement ausgebildet ist.

Die Wasserarmatur 10 umfasst ferner ein außerhalb der Gehäuseteile 12, 18 und 44 angeordnetes und mit dem Ventilelement 60 gekoppeltes Bedienelement 62, welches vorliegend ebenfalls durch die Kartusche 28 gebildet ist. Beispielsweise ist das Ventilelement 60 einstückig mit dem Bedienelement 62 ausgebildet. Über das Bedienelement 62 ist das Ventilelement 60 bewegbar, so dass über das Bedienelement 62 das genannte Gemisch beziehungsweise die genannte fluidische Verbindung des Mischbereichs 30 mit den Kanälen 20 und 22 bedarfsgerecht von einer Person eingestellt werden kann.

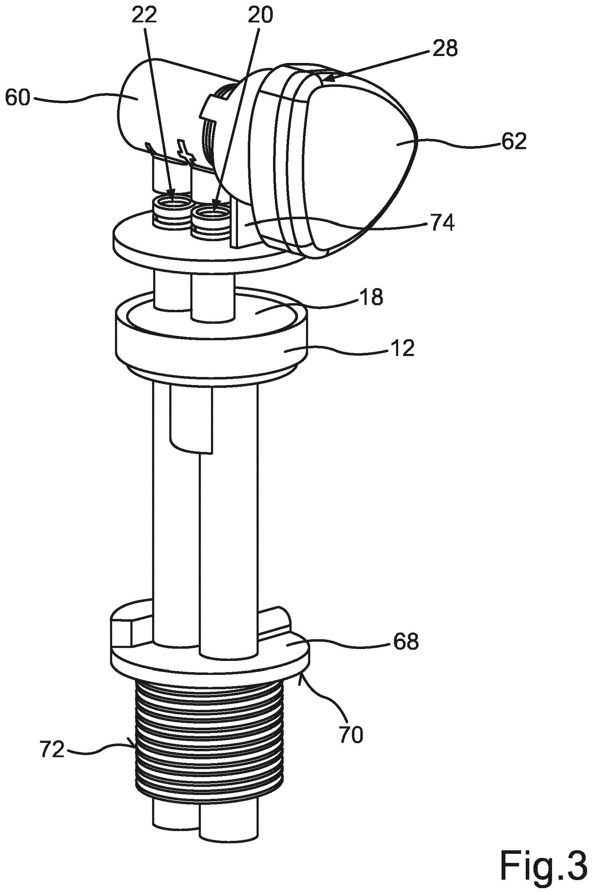

Aus Fig. 1 ist erkennbar, dass das Bedienelement 62 um eine Drehachse 64 relativ zu den Gehäuseteilen 12, 18 und 44 drehbar ist, wobei die Drehachse 64 senkrecht zur Drehachse 24 verläuft. Die Drehbarkeit des Bedienelements 62 ist in Fig. 1 durch einen Richtungspfeil 66 veranschaulicht. Dabei kann das Bedienelement 62 sowohl in eine erste Drehrichtung als auch in eine der ersten Drehrichtung entgegengesetzte, zweite Drehrichtung um eine Drehachse 64 gedreht werden. In Fig. 3 und 4 ist zu erkennen, , dass das zweite Gehäuseteil 18 einen Zapfen 74 aufweist, mittels welchem die Kartusche 28 in ihrer axialen Richtung, welche mit der Drehachse 64 zusammenfällt, insbesondere an dem Gehäuseteil 18 gesichert ist. Ferner ist das Gehäuseteil 44 mit dem Gehäuseteil 18, insbesondere drehfest, verbunden, so dass die Gehäuseteile 44 und 18 gemeinsam um die Drehachse 24 relativ zu dem Gehäuseteil 12 um wenigstens 360 Grad, insbesondere um ein Vielfaches von 360 Grad und insbesondere grenzenlos, drehbar sind.

Bezogen auf eine senkrecht zur Drehachse 24 verlaufende Richtung ist das Bedienelement 62 neben dem Gehäuseteil 44 beziehungsweise seitlich des Gehäuseteils 44 angeordnet, so dass die in Längserstreckungsrichtung der Kanäle 14, 16, 20 und 22 verlaufende Höhe der Wasserarmatur 10 gering gehalten werden kann. Ferner sind das Ventilelement 60 und der Mischbereich 30 in dem Gehäuseteil 44 angeordnet.

Durch das erste Gehäuseteil 12 ist ein Flansch 68 gebildet, welcher auch als Montageflansch oder Befestigungsflansch bezeichnet wird. Durch den Flansch 68 wiederum ist eine Montagefläche 70 gebildet, über welche die Wasserarmatur 10 an einem Bauelement des Wohnwagens, Caravans, Motorcaravans oder Boots abstützbar ist. Bei diesem Bauelement handelt es sich beispielsweise um eine Arbeitsplatte oder um eine Spüle, in welche das Wasser aus dem Wasserauslauf 50 strömen kann.

Auf einer den Kanälen 20 und 22 abgewandten Seite der Montagefläche 70 ist durch das erste Gehäuseteil 12 ein Verbindungselement in Form eines Gewindes 72 gebildet, welches als Außengewinde ausgebildet ist. Mittels des Außengewindes ist die Wasserarmatur 10 mit dem genannten Bauelement verbindbar beziehungsweise an dem Bauelement befestigbar. Hierzu wird beispielsweise eine Mutter, welche ein mit dem Außengewinde korrespondierendes Innengewinde aufweist, auf das Gewinde 72 aufgeschraubt, so dass das genannte Bauelement zwischen der Montagefläche 70 und der Mutter geklemmt wird. Dadurch wird die Wasserarmatur 10 an dem Bauelement befestigt.

## Patentansprüche

1. Wasserarmatur (10), insbesondere für einen Wohnwagen, Caravan, Motorcaravan oder ein Boot, mit wenigstens einem ersten Gehäuseteil (12), welches einen von Wasser durchströmbaren ersten Kanal (14) und einen zumindest teilweise fluidisch von dem ersten Kanal (14) getrennten und von Wasser durchströmbaren, zweiten Kanal (16) aufweist, und mit:
• einem zweiten Gehäuseteil (18), welches einen von Wasser durchströmbaren und fluidisch mit dem ersten Kanal (14) verbundenen, dritten Kanal (20) und einen zumindest teilweise fluidisch von dem dritten Kanal (20) getrennten, von Wasser durchströmbaren und fluidisch mit dem zweiten Kanal (16) verbundenen, vierten Kanal (22) aufweist und um eine Drehachse (24) relativ zu dem ersten Gehäuseteil (12) drehbar ist, und
• wenigstens einem fluidisch mit dem dritten Kanal (20) und dem vierten Kanal (22) verbindbaren und stromab der Kanäle (14, 16, 20, 22) angeordneten Mischbereich (30) zum Mischen des Wassers aus dem dritten Kanal (20) mit dem Wasser aus dem vierten Kanal (22), wobei der Mischbereich (30) mit dem zweiten Gehäuseteil (18) relativ zum ersten Gehäuseteil (12) mitdrehbar ausgebildet ist
**dadurch gekennzeichnet, dass**
das erste Gehäuseteil (12) und das zweite Gehäuseteil (18) jeweils zumindest teilweise in einem äußeren, dritten Gehäuseteil (44) aufgenommen sind, welches mit dem zweiten Gehäuseteil (18) relativ zum ersten Gehäuseteil (12) um die Drehachse (24) mitdrehbar ist, wobei der Mischbereich (30) in dem dritten Gehäuseteil (44) angeordnet ist.

2. Wasserarmatur (10) nach Anspruch 1,
**dadurch gekennzeichnet, dass**
das zweite Gehäuseteil (18) um wenigstens 360 Grad um die Drehachse (24) relativ zu dem ersten Gehäuseteil (12) drehbar ist.

3. Wasserarmatur (10) nach Anspruch 1 oder 2,
**dadurch gekennzeichnet, dass**
der dritte Kanal (20) koaxial zur Drehachse (24) angeordnet ist.

4. Wasserarmatur (10) nach einem der vorhergehenden Ansprüche,
**dadurch gekennzeichnet, dass**
durch das erste Gehäuseteil (12) und das zweite Gehäuseteil (18) ein mit dem vierten Kanal (22) fluidisch verbundener Übergabebereich (32) gebildet ist, in welchen der zweite Kanal (16) mündet, wobei der Übergabebereich (32) zumindest einen wenigstens einen Teilbereich (42) des dritten Kanals (20) begrenzenden Längenbereich (40) des zweiten Gehäuseteils (18) außenumfangsseitig umgibt.

5. Wasserarmatur (10) nach Anspruch 4,
**dadurch gekennzeichnet, dass**
der Übergabebereich (32) den Längenbereich (40) in dessen Umfangsrichtung zumindest teilweise oder vollständig umlaufend umgibt.

6. Wasserarmatur (10) nach einem der vorhergehenden Ansprüche,
**dadurch gekennzeichnet, dass**
das äußere dritte Gehäuseteil (44) einstückig ausgebildet ist.

7. Wasserarmatur (10) nach einem der vorhergehenden Ansprüche,
**dadurch gekennzeichnet, dass**
durch das dritte Gehäuseteil (44) ein Wasserauslaufrohr der Wasserarmatur gebildet ist.

8. Wasserarmatur (10) nach einem der vorhergehenden Ansprüche,
**dadurch gekennzeichnet, dass**
das zweite Gehäuseteil (18) vollständig in dem dritten Gehäuseteil (44) aufgenommen ist.

9. Wasserarmatur (10) nach einem der vorhergehenden Ansprüche,
**dadurch gekennzeichnet, dass**
wenigstens ein relativ zu dem ersten Gehäuseteil (12) und relativ zu dem zweiten Gehäuseteil (18) bewegbares Ventilelement (60) vorgesehen ist, mittels welchem ein Gemisch aus dem Wasser aus dem dritten Kanal (20) und dem Wasser aus dem vierten Kanal (22) einstellbar ist.

10. Wasserarmatur (10) nach Anspruch 9,
**dadurch gekennzeichnet, dass**
wenigstens ein außerhalb des ersten Gehäuseteil (12) und außerhalb des zweiten Gehäuseteils (18) angeordnetes und mit dem Ventilelement (60) gekoppeltes Bedienelement (62) vorgesehen ist, über welches das Ventilelement (60) bewegbar ist.

11. Wasserarmatur (10) nach Anspruch 10,
**dadurch gekennzeichnet, dass**
das Bedienelement (62) seitlich des dritten Gehäuseteils (44) angeordnet ist.

12. Wasserarmatur (10) nach Anspruch 10 oder 11,
**dadurch gekennzeichnet, dass**
das Ventilelement (60) in dem dritten Gehäuseteil (44) aufgenommen ist.

13. Wasserarmatur (10) nach einem der vorhergehenden Ansprüche,
**dadurch gekennzeichnet, dass**
durch das erste Gehäuseteil (12) ein Verbindungselement, insbesondere ein Gewinde (72), gebildet ist, mittels welchem die Wasserarmatur (10) an einem korrespondierenden Bauelement befestigbar ist und/oder dass das erste Gehäuseteil (12) und/oder das zweite Gehäuseteil (18) einstückig ausgebildet ist.

## Claims

1. A water fitting (10), in particular for a camper, a caravan, a motor caravan or a boat, comprising at least a first housing part (12) comprising a first channel (14) capable of being traversed by water and a second channel (16) at least partially fluidically separated from the first channel (14) and capable of being traversed by water, and comprising:
- a second housing part (18), which comprises a third channel (20) capable of being traversed by water and fluidically connected to the first channel (14) and a fourth channel (22) at least partially fluidically separated from the third channel (20), capable of being traversed by water and fluidically connected to the second channel (16) and is rotatable around a rotational axis (24) relative to the first housing part (12), and
- at least one mixing area (30) fluidically connectable to the third channel (20) and the fourth channel (22) and arranged downstream of the channels (14, 16, 20, 22) for mixing the water from the third channel (20) with the water from the fourth channel (22), wherein the mixing area (30) is formed rotatable together with the second housing part (18) relative to the first housing part (12),
**characterized in that**
the first housing part (12) and the second housing part (18) are each at least partially received in an outer, third housing part (44), which is rotatable around the rotational axis (24) together with the second housing part (18) relative to the first housing part (12), wherein the mixing area (30) is arranged in the third housing part (44).

2. The water fitting (10) according to claim 1,
**characterized in that**
the second housing part (18) is rotatable by at least 360 degrees around the rotational axis (24) relative to the first housing part (12).

3. The water fitting (10) according to claim 1 or 2,
**characterized in that**
the third channel (20) is arranged coaxial to the rotational axis (24).

4. The water fitting (10) according to any one of the preceding claims,
**characterized in that**
a transfer area (32) fluidically connected to the fourth channel (22) is formed by the first housing part (12) and the second housing part (18), into which the second channel (16) opens, wherein the transfer area (32) surrounds at least one length area (40) of the second housing part (18) bounding at least a partial area (42) of the third channel (20) on the outer circumferential side.

5. The water fitting (10) according to claim 4,
**characterized in that**
the transfer area (32) at least partially or completely circumferentially surrounds the length area (40) in the circumferential direction thereof.

6. The water fitting (10) according to any one of the preceding claims,
**characterized in that**
the outer third housing part (44) is integrally formed.

7. The water fitting (10) according to any one of the preceding claims,
**characterized in that**
a water outlet pipe of the water fitting is formed by the third housing part (44).

8. The water fitting (10) according to any one of the preceding claims,
**characterized in that**
the second housing part (18) is completely received in the third housing part (44).

9. The water fitting (10) according to any one of the preceding claims,
**characterized in that**
at least one valve element (60) movable relative to the first housing part (12) and relative to the second housing part (18) is provided, by means of which a mixture of the water from the third channel (20) and the water from the fourth channel (22) is adjustable.

10. The water fitting (10) according to claim 9,
**characterized in that**
at least one operating element (62) arranged outside of the first housing part (12) and outside of the second housing part (18) and coupled to the valve element (60) is provided, via which the valve element (60) is movable.

11. The water fitting (10) according to claim 10,
**characterized in that**
the operating element (62) is arranged laterally of the third housing part (44).

12. The water fitting (10) according to claim 10 or 11,
**characterized in that**
the valve element (60) is received in the third housing part (44).

13. The water fitting (10) according to any one of the preceding claims,
**characterized in that**
a connecting element, in particular a thread (72), is formed by the first housing part (12), by means of which the water fitting (10) is attachable to a corresponding component, and/or that the first housing part (12) and/or the second housing part (18) are integrally formed.

## Revendications

1. Robinetterie (10), en particulier pour une caravane, un camping-car ou un bateau, avec au moins un premier élément de boîtier (12) comportant un premier canal (14) pouvant être traversé par de l'eau et un second canal (16) pouvant être traversé par de l'eau et étant séparé de manière fluidique du premier canal (14) au moins partiellement, et comportant:
• un second élément de boîtier (18) comportant un troisième canal (20) pouvant être traversé par de l'eau et étant relié de manière fluidique avec le premier canal (14), et un quatrième canal (22) séparé de manière fluidique du troisième canal (20) au moins partiellement, pouvant être traversé par de l'eau et relié de manière fluidique avec le second canal (16), et étant rotatif autour d'un axe de rotation (24) relatif au premier élément de boîtier (12), et
• au moins une zone de mélange (30) pouvant être reliée de manière fluidique avec le troisième canal (20) et le quatrième canal (22) et agencée en aval des canaux (14, 16, 20, 22) pour mélanger de l'eau en provenance du troisième canal (20) avec de l'eau en provenance du quatrième canal (22), la zone de mélange (30) avec le second élément de boîtier (18) étant formé de manière rotative relative au premier élément de boîtier (12),
**caractérisé en ce que**
le premier élément de boîtier (12) et le second élément de boîtier (18) chacun au moins partiellement sont reçus dans un troisième élément de boîtier extérieur (44) qui est rotatif avec le second élément de boîtier (18) relatif au premier élément de boîtier (12) autour de l'axe de rotation (24), la zone de mélange (30) étant agencée dans le troisième élément de boîtier (44).

2. Robinetterie (10) selon la revendication 1,
**caractérisé en ce que**
le second élément de boîtier (18) est rotatif d'au moins 360 degrés autour de l'axe de rotation (24) relatif au premier élément de boîtier (12).

3. Robinetterie (10) selon la revendication 1 ou 2,
**caractérisé en ce que**
le troisième canal (20) est agencé coaxialement à l'axe de rotation (24).

4. Robinetterie (10) selon l'une quelconque des revendications précédentes,
**caractérisé en ce que**
une zone de transfert (32) est formée par le premier élément de boîtier (12) et le second élément de boîtier (18) qui est reliée de manière fluidique avec le quatrième canal (22), dans laquelle le second canal (16) débouche, la zone de transfert (32) entourant sur sa circonférence extérieure au moins une zone longitudinale (40) du second élément de boîtier (18) limitant au moins une partie (42) du troisième canal (20).

5. Robinetterie (10) selon la revendication 4,
**caractérisé en ce que**
la zone de transfert (32) entoure la zone longitudinale (40) dans sa direction circonférentielle au moins partiellement ou entièrement sur tout le pourtour.

6. Robinetterie (10) selon l'une quelconque des revendications précédentes,
**caractérisé en ce que**
le troisième élément de boîtier extérieur (44) est formé d'une pièce.

7. Robinetterie (10) selon l'une quelconque des revendications précédentes,
**caractérisé en ce que**
par le troisième élément de boîtier (44) un tuyau d'évacuation d'eau de la robinetterie (10) est formé.

8. Robinetterie (10) selon l'une quelconque des revendications précédentes,
**caractérisé en ce que**
le second élément de boîtier (18) est entièrement reçu dans le troisième élément de boîtier (44).

9. Robinetterie (10) selon l'une quelconque des revendications précédentes,
**caractérisé en ce que**
au moins un élément de soupape (60) mobile relatif au premier élément de boîtier (12) et relatif au second élément de boîtier (18) est prévu au moyen duquel un mélange d'eau en provenance du troisième canal (20) et d'eau en provenance du quatrième canal (22) est réglable.

10. Robinetterie (10) selon la revendication 9,
**caractérisé en ce que**
au moins un élément de commande (62) agencé à l'extérieur du premier élément de boîtier (12) et à l'extérieur du second élément de boîtier (18) et couplé à l'élément de soupape (60) est prévu par lequel l'élément de soupape (60) est mobile.

11. Robinetterie (10) selon la revendication 10,
**caractérisé en ce que**
l'élément de commande (62) est agencé sur le côté du troisième élément de boîtier (44).

12. Robinetterie (10) selon la revendication 10 ou 11,
**caractérisé en ce que**
l'élément de soupape (60) est reçu dans le troisième élément de boîtier (44).

13. Robinetterie (10) selon l'une quelconque des revendications précédentes,
**caractérisé en ce que**
par le premier élément de boîtier (12) un élément de liaison, en particulier un filetage (72), est formé au moyen duquel la robinetterie (10) peut être fixée à un composant correspondant et/ou que le premier élément de boîtier (12) et/ou le second élément de boîtier (18) est formé d'une pièce.
